(19) Europäisches Patentamt
European Patent Office
Office européen des brevets

(11) **EP 4 411 360 A1**

(12) **EUROPEAN PATENT APPLICATION**
published in accordance with Art. 153(4) EPC

(43) Date of publication:
**07.08.2024 Bulletin 2024/32**

(21) Application number: **22875959.3**

(22) Date of filing: **21.09.2022**

(51) International Patent Classification (IPC):
*G01N 27/30* (2006.01)      *B01J 19/00* (2006.01)
*G01N 27/28* (2006.01)      *G01N 27/416* (2006.01)

(52) Cooperative Patent Classification (CPC):
**B01J 19/00; G01N 27/28; G01N 27/30; G01N 27/416**

(86) International application number:
**PCT/JP2022/035095**

(87) International publication number:
**WO 2023/054092 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.09.2021 JP 2021158506**

(71) Applicant: **CANON KABUSHIKI KAISHA**
**Tokyo 146-8501 (JP)**

(72) Inventors:
• **ABE, Katsuichi**
**Tokyo 146-8501 (JP)**
• **ENOKIDO, Fuka**
**Tokyo 146-8501 (JP)**
• **MIURA, Jun**
**Tokyo 146-8501 (JP)**
• **MAEDA, Harunobu**
**Tokyo 146-8501 (JP)**
• **TANAKA, Masanori**
**Tokyo 146-8501 (JP)**
• **FUKATSU, Makoto**
**Tokyo 146-8501 (JP)**
• **MATSUKAWA, Akihisa**
**Tokyo 146-8501 (JP)**
• **IKAMI, Yasukazu**
**Tokyo 146-8501 (JP)**
• **MIYAZAKI, Keiji**
**Tokyo 146-8501 (JP)**
• **YAMAMOTO, Takeshi**
**Tokyo 146-8501 (JP)**

(74) Representative: **TBK**
**Bavariaring 4-6**
**80336 München (DE)**

(54) **MICROANALYSIS CHIP**

(57)      An object is to provide a microanalysis chip with which influence on a working electrode due to backflow of ions from a reference electrode region to a working electrode region can be suppressed and stable ion concentration measurement can be performed without increasing a chip size or prolonging a measurement time. In order to achieve this object, the following microanalysis chip is provided. That is, provided is a microanalysis chip in which: a first channel chamber has a reference electrode arranged therein, the reference electrode having a surface on which an ion crystal having specimen solubility is arranged; a second channel chamber has a working electrode arranged therein; and a first channel and a second channel are configured so that, when a time period required for a specimen to reach the ion crystal after the specimen is dispensed to a dispensing section is represented by T1 and a time period required for the specimen to reach the working electrode after the specimen is dispensed to the dispensing section is represented by T2, the time period T1 and the time period T2 satisfy a relationship of T1>T2.

FIG. 1

**Description**

[Technical Field]

The present invention relates to a microanalysis chip in which a microchannel is formed inside a porous substrate.

[Background Art]

In recent years, microanalysis chips that can efficiently perform biochemical analysis in a single chip using microsized microchannels have attracted attention in a wide range of fields. More specifically, microanalysis chips are attracting attention not only in biochemical research but also in various fields such as medicine, drug discovery, healthcare, environment, and food.

In the early 1990s, microanalysis chips were developed that used photolithography and molds to form micron-sized microchannels on glass and silicon to perform sample pretreatment, stirring, mixing, reaction, and detection on a single chip. As a result, miniaturization of inspection systems, rapid analysis, and reduction of samples and waste liquid were realized.

Electrochemical analysis measures the potential between electrodes immersed in a sample to be analyzed, and is widely used in fields such as medicine and the environment. Conventional electrochemical analysis is performed by engineers using sophisticated equipment, which limits the fields and resources for measurement to some extent. However, there is a need for inexpensive, easy-to-handle, and disposable microanalytical chips for electrochemical analysis for use in developing countries, remote areas, and disaster settings where medical facilities are not sufficient, and for use in airports where the spread of infectious diseases needs to be contained at the border.

For electrochemical analysis, it is necessary to provide a reference electrode that can maintain a constant potential and has a stable potential, for example, to quantify electrolyte ions in a solution. It has been difficult to miniaturize glass electrodes, which are traditionally used as reference electrodes, because they are expensive and require internal liquid. Moreover, when storing glass electrodes, it is necessary to store them in a concentrated solution of ions used in the glass electrodes, and they are not easy to handle.

In Patent Literature 1, a device including a microanalysis chip capable of potentiometric measurement using a porous substrate is proposed, and electrochemical measurement with low cost, easy handling and high disposability is possible. The device includes one or more working electrodes and one reference electrode on the porous substrate, and both electrodes need to be electrically connected by a fluid for potentiometric measurement. In order to obtain a stable potential at the reference electrode, a high-concentration aqueous solution of KCl is used as a reference solution and dispensed into the reference electrode region including the reference electrode.

Non-Patent Literature 1 also proposes a filter paper-based measuring device for the concentrations of Na and K ions. The device has a dispensing section for dispensing the sample, and the dispensed sample penetrates from the dispensing section to the respective regions of the working electrode and the reference electrode, thereby electrically connecting both electrodes and enabling potentiometric measurement. In the device, a KCl ion crystal is deposited on the reference electrode in order to obtain a stable potential at the reference electrode, and KCl dissolves into the sample during measurement, thereby retaining a high concentration of Cl ions in the reference electrode region and obtaining a stable potential at the reference electrode. In addition, only ions to be measured are selected by a K ion selective film formed to cover the working electrode, so that measurement can be performed without being affected by other ions.

[Citation List]

[Patent Literature]

PTL 1: U.S. Patent Application Publication No. 2016/033438

[Non-Patent Literature]

NPL 1: Nipapan Ruecha, Orawon Chailapakul, Koji Suzuki and Daniel Citterio, 'Fully Inkjet-Printed Paper-Based Potentiometric Ion-Sensing Devices', Analytical Chemistry August 29, 2017 published, 89, pp. 10,608-10,616

[Summary of Invention]

[Technical Problem]

However, the aforementioned configuration may have an impact on the sample concentration measurement accuracy. This is because, in order to obtain a stable potential at the working electrode, it takes some time to measure after the sample reaches the working electrode, but during this time, ion crystal having specimen solubility on the reference electrode flow back through the sample to the working electrode region and affect the potential of the working electrode. Here, the term "ion crystal having specimen solubility" means "ion crystals soluble in the specimen" and examples thereof include KCl ion crystals.

Here, in order to suppress the effect of the backflow, it is necessary to increase the time for the ions dissolved in the sample to reach the working electrode together with the sample flowing back by increasing the distance from the reference electrode to the working electrode or the like. However, when the distance from the reference electrode to the working electrode is increased, adverse effects such as an increase in the chip size of the microanalysis chip and an increase in the measurement time occur.

The present invention has an object to provide a microanalysis chip with which influence on a working electrode due to backflow of ions from a reference electrode region to a working electrode region can be suppressed and stable ion concentration measurement can be performed without increasing a chip size or prolonging a measurement time.

[Solution to Problem]

In order to achieve the above-mentioned object, according to one aspect of the present disclosure, there is provided a microanalysis chip including a porous substrate having provided therein a channel wall, the channel wall defining: a dispensing section to which a specimen is to be dispensed; a first channel chamber; a second channel chamber; a first channel connecting the dispensing section and the first channel chamber to each other; and a second channel connecting the dispensing section and the second channel chamber to each other, wherein the first channel chamber has a reference electrode arranged therein, the reference electrode having a surface on which an ion crystal having specimen solubility is arranged, wherein the second channel chamber has a working electrode arranged therein, and wherein the first channel and the second channel are configured so that, when a time period required for the specimen to reach the ion crystal after the specimen is dispensed to the dispensing section is represented by T1 and a time period required for the specimen to reach the working electrode after the specimen is dispensed to the dispensing section is represented by T2, the time period T1 and the time period T2 satisfy a relationship of T1>T2.

[Advantageous Effects of Invention]

According to one aspect of the present disclosure, it is possible to provide a microanalysis chip capable of suppressing the influence on the working electrode due to the backflow of ions from the reference electrode region to the working electrode region without increasing the chip size or increasing the measurement time, and capable of stably measuring the ion concentration.

[Brief Description of Drawings]

[FIG. 1]

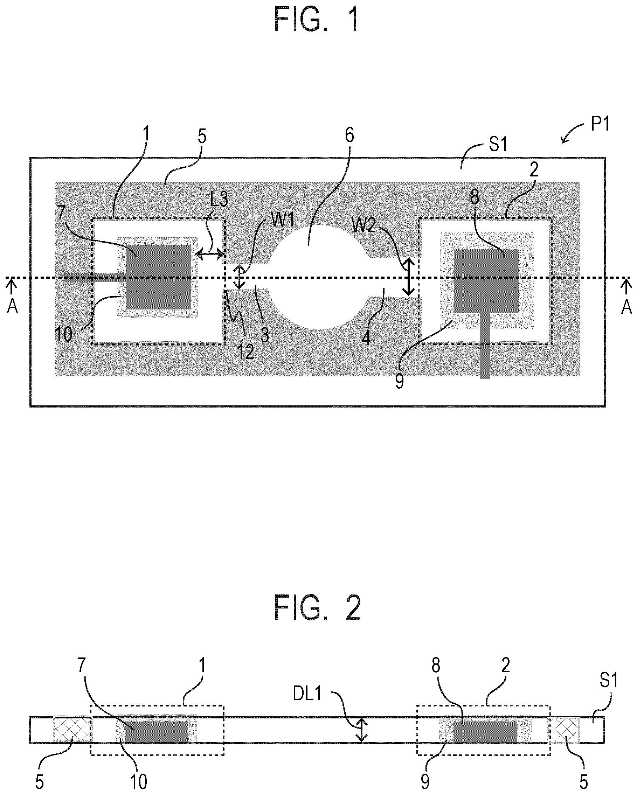

FIG. 1 is a simplified top view for illustrating an example of a channel configuration of a microanalysis chip (P1) according to Example 1.
[FIG. 2]
FIG. 2 is a simplified sectional view of the microanalysis chip (P1) illustrated in FIG. 1.
[FIG. 3]

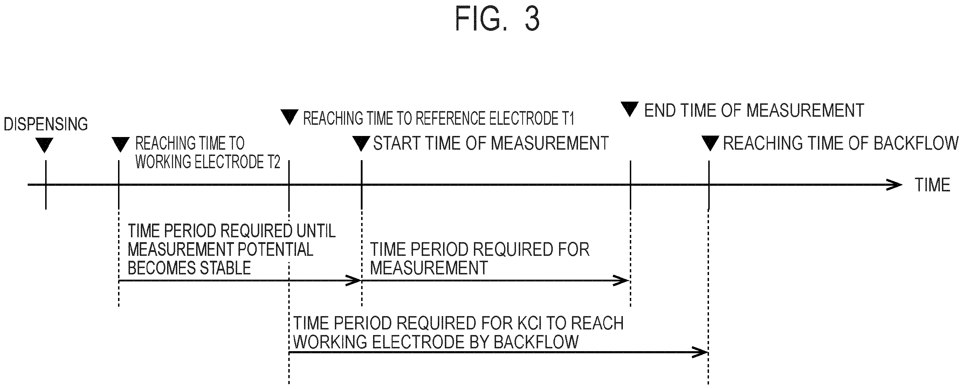

FIG. 3 is an image diagram for illustrating a behavior of a specimen after dispensing in Example 1.
[FIG. 4]

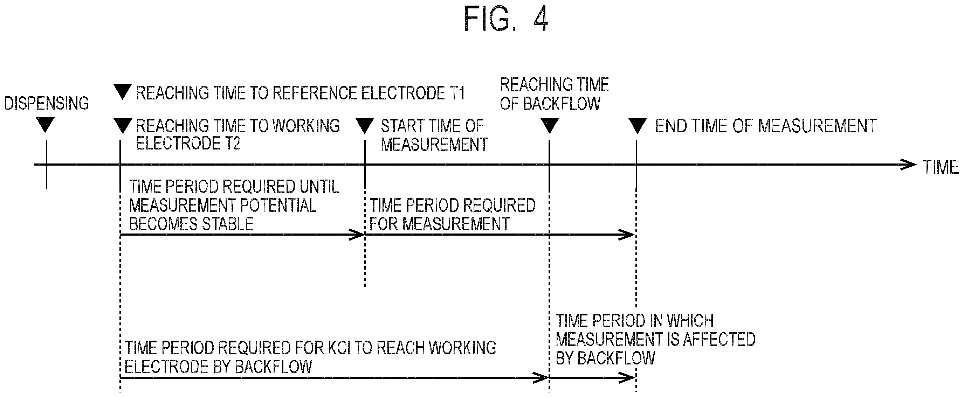

FIG. 4 is an image diagram for illustrating a behavior of a specimen after dispensing in Comparative Example 1-1.
[FIG. 5]

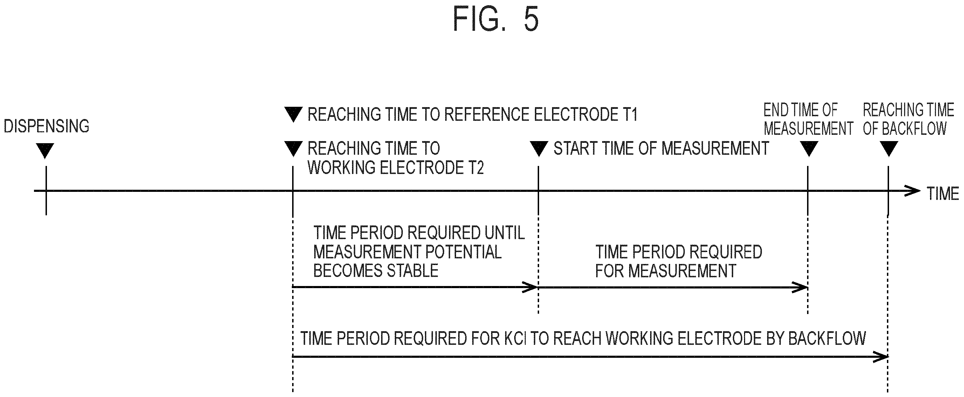

FIG. 5 is an image diagram for illustrating a behavior of a specimen after dispensing in Comparative Example 1-2.
[FIG. 6]

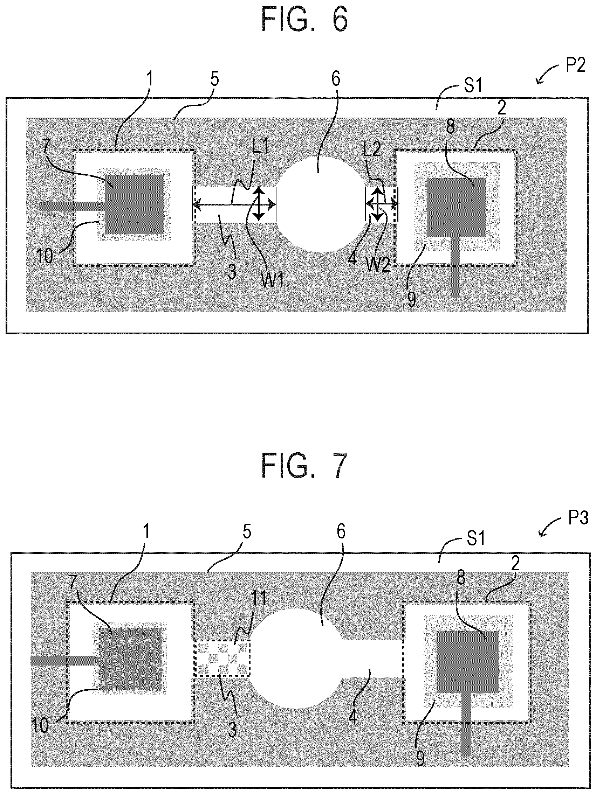

FIG. 6 is a top view for illustrating an example of a channel configuration of a microanalysis chip (P2) according to Example 2.
[FIG. 7]
FIG. 7 is a top view for illustrating an example of a channel configuration of a microanalysis chip (P3) according to Example 3.
[FIG. 8]

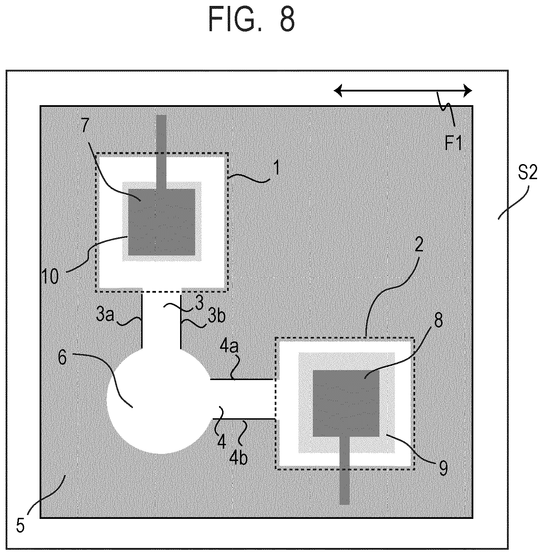

FIG. 8 is a top view for illustrating an example of a channel configuration of a microanalysis chip (P4) according to Example 4.
[FIGS. 9]

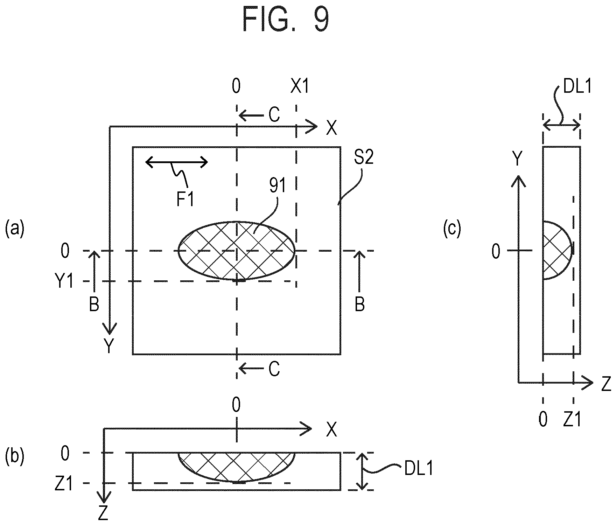

FIGS. 9 are an explanatory top view and explanatory sectional views for illustrating permeation anisotropy of a porous substrate.

[Description of Embodiments]

A microanalysis chip of the present disclosure for solving the above-mentioned problem is described based on the following embodiments. The embodiments described below are merely examples, and are not intended to limit the technical scope of the present disclosure only to those embodiments.

FIG. 1 simply shows a top view of a microanalysis chip P1.

FIG. 2 simply shows an A-A sectional view of the microanalysis chip P1, in which a lead wire of a reference electrode 7 is omitted.

In the microanalysis chip P1, a dispensing part 6 for dispensing a sample, a flow passage chamber 1 (first flow passage chamber), a flow passage chamber 2 (second flow passage chamber), a flow passage 3 (first flow passage), and a flow passage 4 (second flow passage) are formed by a flow passage wall 5 provided inside the porous base material S1. The flow passage 3 connects the dispensing part 6 with the flow passage chamber 1, and the flow passage 4 connects the dispensing part 6 with the flow passage chamber 2.

A reference electrode 7 is arranged in the flow passage chamber 1, and an ion crystal having sample solubility is arranged on the surface of the reference electrode 7.

A working electrode 8 is arranged in the flow passage chamber 2, and the working electrode 8 is covered with an ion selective film 9 having ion selectivity.

When a time period required for a specimen to reach the ion crystal 10 after the specimen is dispensed to the dispensing section 6 is represented by T1, and a time period required for the specimen to reach the working electrode 8 after the specimen is dispensed to the dispensing section 6 is represented by T2, in the channel 3 and the channel 4, the time period T1 and the time period T2 satisfy a relationship of T1>T2.

Now, Examples and Comparative Examples are shown to specifically describe the microanalysis chip of the present disclosure. The microanalysis chip according to the present disclosure is not limited only to the configurations embodied by Examples. Further, various numerical values of a thickness, a length, a porosity, and the like are also not limited to the following values. Further, for example, when a total amount of ions in the specimen is to be measured, the ion-selective membrane 9 is not always required.

[Example 1]

<Configuration of Channels>

The microanalysis chip P1 according to Example 1 is described with reference to FIG. 1 and FIG. 2.

In Examples 1 to 3 and Comparative Examples 1 to 3, after a hydrophobic resin was arranged on a paper-made porous substrate S1 having a thickness of DL1=0.1 mm and a porosity P1 of 50%, heat fixing was performed so that the channel wall 5 through which the specimen is impermeable was formed to form a channel pattern.

The feature of Example 1 resides in that, when a channel sectional area of the channel 3 (first channel) is represented by A1, and when a channel sectional area of the channel 4 (second channel) is represented by A2, the channel sectional area A1 and the channel sectional area A2 satisfy a relationship of A1<A2.

The channel pattern includes the dispensing section 6 to which the specimen is to be dispensed, the channel chamber 1 including the reference electrode 7, and the channel chamber 2 including the working electrode 8. The dispensing section 6 is connected to the channel chamber 1 by the channel 3, and is connected to the channel chamber 2 by the channel 4. In this case, the channel was formed so that a capacity C1 in which a specimen T was permeable is 10 $\mu$L in the channel chamber 1.

Specifically, a channel width W1 of the channel 3 was narrower than a channel width W2 of the channel 4, and W1=2 mm and W2=5 mm were satisfied.

A depth DP1 of the channel 3 and a depth DP2 of the channel 4 were set to be equal to a thickness DL1 of the porous substrate S1.

That is, the channel sectional area A1 of the channel 3 is DL1$\times$W1=0.2 mm$^2$, the channel sectional area A2 of the channel 4 is DL1$\times$W2=0.5 mm$^2$, and a relationship of A1<A2 is satisfied.

In this Example, the sectional area of the channel is adjusted by the channel width, but the present invention is not limited thereto. The relationship of the sectional areas is only required to be a relationship of A1<A2. For example, the channel widths W1 and W2 may be the same, and the depth DP1 of the channel 3 may be set to be smaller than the depth DP2 of the channel 4.

Further, the sectional shape of the channel is not limited to a rectangle or a square, and may be a semicircle, a semi-ellipse, a triangle, or a trapezoid. Moreover, the sectional shape of the channel may be a polygon or a shape formed by curved surfaces without limitation.

In a case of such shapes, the sectional area of the channel is obtained by measuring an area of a cross section taken along a direction orthogonal to a direction in which the channel extends.

Further, in this Example, a paper-made substrate was used as the porous substrate, but the porous substrate is not limited to a paper-made substrate. The porous substrate is only required to cause a capillary action with respect to liquid, and may be a substrate having therein a porous structure, such as an open cell structure or a network structure including a nanofiber structure. The porous substrate may be formed through use of resin, glass, an inorganic substrate, cloth, metal paper, or the like.

Further, in this Example, the channel pattern was formed by heating the hydrophobic resin arranged on the porous substrate to cause the dissolved hydrophobic resin to permeate the inside of the porous substrate and fix the dissolved hydrophobic resin, but the method of forming the channel pattern is not limited thereto. A method of cutting the paper-made porous substrate S1 to leave only the channel shape may be employed, and as another method, the channel wall may be formed by a wax printer or the like.

<Formulation of Electrodes>

Formulation of the electrodes related to Example 1 is described.

The channel chamber 1 includes the reference electrode 7 containing Ag/AgCl as a main component at a position having a distance L3=1 mm from a channel connection portion 12 which is a connection portion with the channel 3. The reference electrode 7 includes, as a contact at the time of measurement, a lead wire formed by continuously extending the electrode from the inside of the channel chamber 1 onto the channel wall 5. Further, the KCl ion crystal 10 of 3.5 mg was used and arranged substantially uniformly in the entire region of the surface of the reference electrode 7.

Meanwhile, in the channel chamber 2, the working electrode 8 PEDOT:PSS (dispersion of polyethylenedioxythiophene and polystyrene sulfonate) as a main component was provided. The working electrode 8 also includes a lead wire formed by continuously extending the electrode from the inside of the channel chamber 2 onto the channel wall 5. The ion-selective membrane 9 was formed so as to cover the entire regions of the top surface and the side surface of the working electrode 8.

The ion-selective membrane 9 was formed from the following materials.

> Valinomycin as an ion-selective material: 1.0 wt%
> Potassium tetrakis(4-chlorophenyl)borate as an anion eliminator: 0.5 wt% o-Nitrophenyl octyl ether: 65.0 wt%
> Polyvinyl chloride: 33.5 wt%

In this Example, the reference electrode 7, the working electrode 8, and the ion-selective membrane 9 were formed in the above-mentioned shapes, sizes, materials, and the like, but the present invention is not limited thereto.

Further, the material of the ion crystal 10 is only required to contain Cl ions, and is not limited to KCl. Moreover, the mass of the ion crystal 10 to be arranged is only required to fall within a range of the mass that becomes a saturated solution when the ion crystal is dissolved in pure water having a volume equivalent to the capacity C1, and is not limited to 3.5 mg.

<Permeation of Specimen>

Permeation of the specimen is described.

After the specimen is dispensed to the dispensing section 6, the specimen permeates the paper-made porous substrate S1 by the capillary action in accordance with the channel pattern.

In this case, when an air gap between fibers forming the paper-made porous substrate S1 is regarded as a tubular pore, a pore radius is represented by "a" (cm), a viscosity of a solution is represented by "$\eta$" (P), a length of the pore is represented by "h" (cm), a surface tension of the solution is represented by "$\gamma$" (dyne/cm), and a contact angle is represented by $\Theta$ (rad), a time period "t" (second) required for the permeation of the specimen is represented by the following equation (1) based on the Lucas-Washburn equation.

[Math. 1]

$$t = \frac{2\eta}{\gamma} \frac{h^2}{\cos\Theta} \frac{1}{a}$$

Equation (1)

Further, at the time of permeation of the specimen along the channel, the permeation becomes slower as the sectional area of the channel becomes narrower. This state is caused because permeation is more affected by the hydrophobic channel wall as the sectional area of the channel becomes narrower, that is, as represented by the equation (1), the permeation speed of the specimen becomes slower in the vicinity of the hydrophobic channel wall having a large contact angle $\Theta$.

Accordingly, the time period (reaching time to reference electrode) T1 required for the specimen to pass through the channel 3 to reach the channel chamber 1 after the specimen is dispensed to the dispensing section 6 and the time period (reaching time to working electrode) T2 required for the specimen to pass through the channel 4 to reach the channel chamber 2 after the specimen is dispensed to the dispensing section 6 have a relationship of T1>T2.

<Measurement of Specimen Concentration>

Measurement of the specimen concentration is described with reference to FIG. 3.

FIG. 3 is an image diagram for illustrating a behavior of the specimen after dispensing in Example 1.

After the specimen is dispensed to the dispensing section 6, the specimen permeates the paper-made porous substrate S1 by the capillary action in accordance with the channel pattern. In this case, as described above, in Example 1, the channel 3 connected to the channel chamber 1 including the reference electrode 7 and the channel 4 connected to the channel chamber 2 including the working electrode 8 have different configurations, and hence have different time periods required until the specimen reaches the respective channel chambers after being dispensed. That is, the reaching time to reference electrode T1 and the reaching time to working electrode T2 have a relationship of T1>T2.

Further, a predetermined time period is required until a measurement potential of the working electrode 8 becomes stable after the specimen reaches the working electrode 8.

Moreover, when the specimen reaches the reference electrode 7 and the measurement potential of the working electrode 8 is stable, concentration measurement of the specimen can be performed, and the measurement of the specimen concentration is ended after an elapse of a predetermined measurement time period.

In this case, when the specimen reaches the reference electrode 7, the KCl ion crystal 10 starts to dissolve in the specimen, and hence high-concentration KCl starts to flow backward through the channel. That is, the phrase "flow backward" refers to movement of KCl dissolved in the specimen toward the working electrode 8.

As illustrated in FIG. 3, in Example 1, with the reaching time to reference electrode T1 and the reaching time to working electrode T2 having a relationship of T1>T2, a reaching time of backflow was able to become later than an end time of measurement. Accordingly, the measurement of the specimen concentration was able to be ended under a state in which no influence of KCl flowing backward was caused.

[Comparative Example 1]

In order to describe the effects of Example 1 in more detail, Comparative Example 1-1 and Comparative Example 1-2 are given.

In Comparative Example 1-1, the channel sectional area A1 of the channel 3 and the channel sectional area A2 of the channel 4 were set to be equal to each other, and were each set to A1=A2=0.5 mm$^2$.

Further, also in Comparative Example 1-2, the channel sectional area A1 of the channel 3 and the channel sectional area A2 of the channel 4 were set to be equal to each other, and were each set to A1=A2=0.2 mm$^2$.

Now, the measurement of the specimen concentration in Comparative Example 1-1 is described with reference to FIG. 4.

FIG. 4 is an image diagram for illustrating a behavior of the specimen after the dispensing in Comparative Example 1-1. In Comparative Example 1-1, there is a possibility that the specimen concentration cannot be accurately measured due to the influence of KCl flowing backward. This state is caused because the channel 3 and the channel 4 have the same configuration, and thus the reaching time to reference electrode T1 and the reaching time to working electrode T2 have a relationship of T1=T2. Thus, the reaching time to reference electrode T1 becomes earlier as compared to that of Example 1, resulting in that the reaching time of backflow also becomes earlier.

Next, the measurement of the specimen concentration in Comparative Example 1-2 is described with reference to FIG. 5.

FIG. 5 is an image diagram for illustrating a behavior of the specimen after the dispensing in Comparative Example 1-2. In Comparative Example 1-2, even when the reaching time to reference electrode T1 and the reaching time to working electrode T2 had a relationship of T1=T2, the measurement of the specimen concentration was able to be ended before the reaching time of backflow. However, the end time of measurement of the specimen concentration became late. This state was caused because a flow speed of the specimen was reduced to delay the reaching time to reference electrode T1 and the reaching time to working electrode T2, and thus a start time of measurement of the specimen concentration became late.

[Points in which Example 1 is Superior to Comparative Example 1]

Points in which Example 1 is superior to Comparative Example 1-1 and Comparative Example 1-2 are described.
The time period required for the specimen to reach the channel chamber after being dispensed is dependent on the sectional area of the channel.
The volume of each channel was set as follows.
Example 1:

the channel sectional area between the dispensing section and the reference electrode was 0.2 mm$^2$; and
the channel sectional area between the dispensing section and the working electrode was 0.5 mm$^2$.

Comparative Example 1-1:

the channel sectional area between the dispensing section and the reference electrode was 0.5 mm$^2$; and
the channel sectional area between the dispensing section and the working electrode was 0.5 mm$^2$.

Comparative Example 1-2:

the channel sectional area between the dispensing section and the reference electrode was 0.2 mm$^2$; and
the channel sectional area between the dispensing section and the working electrode was 0.2 mm$^2$.

After the dispensing, in Example 1 and Comparative Example 1, the flow of the specimen to each of the working electrode and the reference electrode required a time period of about 50 seconds when the sectional area was 0.2 mm$^2$, and required a time period of about 20 seconds when the sectional area was 0.5 mm$^2$.
Further, after the specimen reached the ion-selective membrane 9, a time period of about 45 seconds was required until the measurement potential of the working electrode 8 became stable.
Moreover, when the specimen reached the reference electrode 7 and the measurement potential of the working electrode 8 was stable, concentration measurement of the specimen was allowed, and required 50 seconds from the measurement start to the measurement end.
Further, the time period required for backflow of KCl was a time period of about 75 seconds when the channel sectional area was 0.2 mm$^2$, and was a time period of about 30 seconds when the channel sectional area was 0.5 mm$^2$.
Accordingly, in Example 1, a time period of about 50 seconds was required for the specimen to reach the reference electrode 7 from the dispensing section 6 because the channel sectional area was 0.2 mm$^2$. After the specimen reached the reference electrode 7, a time period required for backflow of KCl to the dispensing section 6 was about 75 seconds because the channel sectional area was 0.2 mm$^2$. A time period required for backflow to the working electrode 8 from the dispensing section was about 30 seconds because the channel sectional area was 0.5 mm$^2$. That is, in Example 1, after the specimen was dispensed, a reaching time of backflow required for KCl to flow backward to reach the working electrode 8 was about 155 seconds. Similarly, the reaching time of backflow in Comparative Example 1-1 was about 80 seconds, and the reaching time of backflow in Comparative Example 1-2 was about 200 seconds.
Table 1 shows the end time of measurement, the reaching time of backflow, and the like in Example 1 and Comparative Examples 1-1 and 1-2.

[Table 1]

Table 1

| | Reaching time to reference electrode T1 [second] | Reaching time to working electrode T2 [second] | Start time of measurement [second] | End time of measurement [second] | Reaching time of backflow [second] | Measurable time [second] |
|---|---|---|---|---|---|---|
| Example 1 | 50 | 20 | 65 | 115 | 155 | 90 |
| Comparative Example 1-1 | 20 | 20 | 65 | - | 80 | 15 |
| Comparative Example 1-2 | 50 | 50 | 95 | 145 | 200 | 105 |

Table 1 shows, in the configurations of Example 1 and Comparative Example 1, through use of a time at which the specimen is dispensed as a reference,

a time period required for the specimen to reach each of the electrodes ("reaching time to reference electrode" and "reaching time to working electrode"),
a time period required until the specimen concentration measurement can be started ("start time of measurement"),
a time period required until the measurement can be ended ("end time of measurement"),
a time period required for the ion crystal KCl to reach the working electrode via the specimen flowing backward ("reaching time of backflow"), and
an elapsed time period from the "start time of measurement" to the "reaching time of backflow" ("measurable time"), in units of seconds.

In Example 1, the measurement was able to be ended in 115 seconds, before the ion crystal KCl flowed backward to reach the working electrode.
Meanwhile, in Comparative Example 1-1, KCl reached the working electrode earlier than the end time of measurement, and hence accurate ion concentration of the specimen was not able to be measured.
Further, in Comparative Example 1-2, the measurement was able to be ended before KCl reached the working electrode, but a time period further longer by 30 seconds than that in Example 1 was required until the end of the measurement.
With the above-mentioned evaluation, the superiority of Example 1 to Comparative Example 1-1 and Comparative Example 1-2 was confirmed.

[Example 2]

A microanalysis chip P2 according to Example 2 is described. The dispensing section 6, the channel chamber 1, the channel chamber 2, the reference electrode 7, the working electrode 8, the ion-selective membrane 9, and the ion crystal 10 have configurations similar to those of the microanalysis chip P1, and hence description thereof is omitted. Components common to the microanalysis chip P1 are hereinafter described with common component names.

<Configuration of Channels>

A channel pattern of the microanalysis chip P2 is described.
FIG. 6 simply shows a top view of the microanalysis chip P2.
The feature of Example 2 resides in that, when a channel volume of the channel 3 is represented by V1, and when a channel volume of the channel 4 is represented by V2, the channel volume V1 and the channel volume V2 satisfy a relationship of V1>V2.
For example, when a channel width of the channel 3 is represented by W1, a channel depth thereof is represented by DP1, a channel length thereof is represented by L1, and a channel volume thereof is represented by V1, and when a channel width of the channel 4 is represented by W2, a channel depth thereof is represented by DP2, a channel length thereof is represented by L2, and a channel volume thereof is represented by V2, the following relationships are satisfied:

$$V1 = W1 \times DP1 \times L1;$$

and

$$V2 = W2 \times DP2 \times L2,$$

and the following relationship is satisfied:

$$W1 \times DP1 \times L1 > W2 \times DP2 \times L2.$$

With reference to FIG. 6, an example of the microanalysis chip P2 is specifically described.

The channel length L1 of the channel 3 was set to be longer than the channel length L2 of the channel 4, and L 1 = 12 mm and L2=6 mm were set. Further, the channel widths W1 and W2 were set to be equal to each other, and were each set to W1=W2=5 mm.

That is, the channel volume V1 of the channel 3 is $DP1 \times W1 \times L1 = 6$ mm$^3$ and the channel volume V2 of the channel 4 is $DP2 \times W2 \times L2 = 3$ mm$^3$, and thus a relationship of V1>V2 is obtained.

In this Example, the channel volume is adjusted by the channel length, but the present invention is not limited thereto. The relationship of the channel volumes is only required to be V1>V2. For example, the channel lengths L1 and L2 may be set to be equal to each other and the channel widths W1 and W2 may be set to be equal to each other. In this case, the depth DP1 of the channel 3 may be set to be deeper than the depth DP2 of the channel 4 so that V1>V2 is obtained.

[Comparative Example 2]

In order to describe the effects of Example 2 in more detail, Comparative Example 2-1 and Comparative Example 2-2 are given.

In both Comparative Example 2-1 and Comparative Example 2-2, points other than the points described below were similar to those of Example 2.

In Comparative Example 2-1, the channel volume V1 of the channel 3 and the channel volume V2 of the channel 4 were set to be equal to each other, and were each set to V1=V2=3 mm$^3$.

Further, also in Comparative Example 2-2, the channel volume V1 of the channel 3 and the channel volume V2 of the channel 4 were set to be equal to each other, but were each set to V1=V2=6 mm$^3$.

[Points in which Example 2 is Superior to Comparative Example 2]

Points in which Example 2 is superior to Comparative Example 2-1 and Comparative Example 2-2 are described.

The time period required for the specimen to reach the channel chamber after being dispensed is dependent on the channel volume.

The volume of each channel was as follows.

Example 2:

the channel volume between the dispensing section and the reference electrode was 12 mm$^3$; and
the channel volume between the dispensing section and the working electrode was 6 mm$^3$.

Comparative Example 2-1:

the channel volume between the dispensing section and the reference electrode was 6 mm$^3$; and
the channel volume between the dispensing section and the working electrode was 6 mm$^3$.

Comparative Example 2-2:

the channel volume between the dispensing section and the reference electrode was 12 mm$^3$; and
the channel volume between the dispensing section and the working electrode was 12 mm$^3$.

After the dispensing, until the specimen reached the working electrode and the reference electrode, a time period of about 20 seconds was required when the channel volume was 6 mm$^3$, and a time period of about 40 seconds was required when the channel volume was 12 mm$^3$.

The time period required until the measurement potential became stable after the specimen reached the working electrode was 45 seconds, and further, the time period required for the measurement was 50 seconds.

Further, the time period required for backflow of KCl was a time period of about 30 seconds when the channel volume was 6 mm$^3$, and was a time period of about 60 seconds when the channel volume was 12 mm$^3$.

Thus, in Example 2, the reaching time of backflow was as follows. The time period required for the specimen to reach the reference electrode from the dispensing section was 40 seconds, the time period required for backflow from the reference electrode to the dispensing section was 60 seconds, and the time period required for backflow from the dispensing section to the working electrode was 30 seconds. Thus, the reaching time of backflow was a total of 130 seconds.

Table 2 shows the end time of measurement, the reaching time of backflow, and the like in Example 2 and Comparative Examples 2-1 and 2-2.

[Table 2]

Table 2

|  | Reaching time to reference electrode T1 [second] | Reaching time to working electrode T2 [second] | Start time of measurement [second] | Reaching time of backflow [second] | Measurable time [second] | End time of measurement [second] |
|---|---|---|---|---|---|---|
| Example 2 | 40 | 20 | 65 | 130 | 65 | 115 |
| Comparative Example 2-1 | 20 | 20 | 65 | 80 | 15 | - |
| Comparative Example 2-2 | 40 | 40 | 85 | 160 | 75 | 135 |

Table 2 shows, in the configurations of Example 2 and Comparative Example 2, through use of a time at which the specimen is dispensed as a reference,

a time period required for the specimen to reach each of the electrodes ("reaching time to reference electrode" and "reaching time to working electrode"),
a time period required until the specimen concentration measurement can be started ("start time of measurement"),
a time period required until the measurement can be ended ("end time of measurement"),
a time period required for the ion crystal KCl to reach the working electrode via the specimen flowing backward ("reaching time of backflow"), and
an elapsed time period from the "start time of measurement" to the "reaching time of backflow" ("measurable time"), in units of seconds.

In Example 2, the measurement was able to be ended in 115 seconds, before the ion crystal KCl flowed backward to reach the working electrode.

Meanwhile, in Comparative Example 2-1, KCl reached the working electrode earlier than the end time of measurement, and hence accurate ion concentration of the specimen was not able to be measured.

Further, in Comparative Example 2-2, the measurement was able to be ended before KCl reached the working electrode, but a time period further longer by 20 seconds than that in Example 2 was required until the end of the measurement. In addition, the size of the microanalysis chip increased in order to ensure the channel volume.

With the above-mentioned evaluation, the superiority of Example 2 to Comparative Example 2-1 and Comparative Example 2-2 was confirmed.

[Example 3]

A microanalysis chip P3 according to Example 3 is described. The dispensing section 6, the channel chamber 1, the channel chamber 2, the reference electrode 7, the working electrode 8, the ion-selective membrane 9, and the ion crystal 10 have configurations similar to those of the microanalysis chip P1, and hence description thereof is omitted.

Components common to the microanalysis chip P1 are hereinafter described with common component names.

<Configuration of Channels>

A channel pattern of the microanalysis chip P3 is described.

The feature of Example 3 resides in that fine hydrophobic resin regions are formed in a dot pattern inside of the channel 3 so that the formed hydrophobic resin regions hinder permeation of the specimen.

The phrase "formed in a dot pattern" as used herein means a state in which a plurality of hydrophobic resin regions are arranged apart from each other without concentrating to one location.

In Example 3, no hydrophobic resin region is formed inside of the channel 4, but the hydrophobic resin region may be formed inside of the channel 4.

The shape of the hydrophobic resin region is not limited to a spherical shape, and may be a cuboid shape, a cube shape, or other shapes.

FIG. 7 simply shows a top view of the microanalysis chip P3 obtained when no hydrophobic resin region is formed inside of the channel 4.

With reference to FIG. 7, an example of the microanalysis chip P3 in which no hydrophobic resin region is formed inside of the channel 4 is specifically described.

Hydrophobic resin cubes were formed as the hydrophobic resin regions inside of the channel 3. Through use of a hydrophobic resin cube (0.1 mm (width)×0.1 mm (length)×0.1 mm (depth)=0.001 mm$^3$ (volume)) as one unit (in number), eight hydrophobic resin cubes were arranged in a staggered manner (as a checkered pattern) as illustrated in FIG. 7 so as to obtain a hydrophobic resin pattern 11.

Meanwhile, no hydrophobic resin region was formed inside of the channel 4.

As described above, in this Example, the hydrophobic resin regions were formed only in the channel 3, but the present invention is not limited thereto. The hydrophobic resin region may be formed also in the channel 4.

Further, in this Example, at the time of formation of the channel wall 5, a hydrophobic resin was arranged on the paper-made porous substrate S1 at a portion corresponding to the channel, and then heat fixing was performed to form the hydrophobic resin region. However, the present invention is not limited thereto. For example, after the channel wall 5 was formed, a part or all of the hydrophobic resin regions may be formed by a wax printer or the like.

[Comparative Example 3]

In order to describe the effects of Example 3 in more detail, Comparative Example 3-1 and Comparative Example 3-2 are given.

In both of Comparative Example 3-1 and Comparative Example 3-2, points other than the points described below were similar to those of Example 3.

In Comparative Example 3-1, no hydrophobic resin region is formed inside of the channel 3 and the channel 4.

Further, in Comparative Example 3-2, inside of the channel 3 and channel 4, eight hydrophobic resin cubes are formed similarly to the channel 3 of Example 3.

[Points in which Example 3 is Superior to Comparative Example 3]

Points in which Example 3 is superior to Comparative Example 3-1 and Comparative Example 3-2 are described.

The hydrophobic resin regions formed inside of the channel hinder permeation of the specimen. That is, the speed of the specimen flowing through the channel can be adjusted by the hydrophobic resin regions inside of the channel.

After the dispensing, a time period of about 20 seconds was required for the specimen to reach each of the working electrode and the reference electrode when the number of hydrophobic resin cubes was zero, and a time period of about 80 seconds was required when the number of hydrophobic resin cubes was eight.

The time period required until the measurement potential became stable after the specimen reached the working electrode was 45 seconds, and further, the time period required for the measurement was 50 seconds.

In Example 3 and Comparative Example 3-2, the measurement was able to be performed at a time point at which the specimen reached the reference electrode.

Further, a time period of about 30 seconds was required for backflow of KCl through the channel when the number of hydrophobic resin cubes was zero, and a time period of about 120 seconds was required when the number of hydrophobic resin cubes was eight.

Thus, in Example 3, the reaching time of backflow was as follows. The time period required for the specimen to reach the reference electrode from the dispensing section was 80 seconds, the time period required for backflow from the reference electrode to the dispensing section was 120 seconds, and the time period required for backflow from the dispensing section to the working electrode was 30 seconds. Thus, the reaching time of backflow was a total of 230 seconds.

Table 3 shows the end time of measurement, the reaching time of backflow, and the like in Example 3 and Comparative Examples 3-1 and 3-2.

[Table 3]

Table 3

|  | Reaching time to reference electrode T1 [second] | Reaching time to working electrode T2 [second] | Start time of measurement [second] | Reaching time of backflow [second] | Measurable time [second] | End time of measurement [second] |
|---|---|---|---|---|---|---|
| Example 3 | 80 | 20 | 80 | 230 | 150 | 130 |
| Comparative Example 3-1 | 20 | 20 | 65 | 80 | 15 | - |
| Comparative Example 3-2 | 80 | 80 | 125 | 320 | 195 | 175 |

Table 3 shows, in the configurations of Example 3 and Comparative Example 3, through use of a time at which the specimen is dispensed as a reference,

a time period required for the specimen to reach each of the electrodes ("reaching time to reference electrode" and "reaching time to working electrode"),
a time period required until the specimen concentration measurement can be started ("start time of measurement"),
a time period required until the measurement can be ended ("end time of measurement"),
a time period required for the ion crystal KCl to reach the working electrode via the specimen flowing backward ("reaching time of backflow"), and
an elapsed time period from the "start time of measurement" to the "reaching time of backflow" ("measurable time"), in units of seconds.

In Example 3, the measurement was able to be ended in 130 seconds, before the ion crystal KCl flowed backward to reach the working electrode.

Meanwhile, in Comparative Example 3-1, KCl reached the working electrode earlier than the end time of measurement, and hence accurate ion concentration of the specimen was not able to be measured.

Further, in Comparative Example 3-2, the measurement was able to be ended before KCl reached the working electrode, but a time period further longer by 45 seconds than that in Example 3 was required until the end of the measurement.

With the above-mentioned evaluation, the superiority of Example 3 to Comparative Example 3-1 and Comparative Example 3-2 was confirmed.

[Example 4]

A microanalysis chip P4 according to Example 4 is described. The dispensing section 6, the channel chamber 1, the channel chamber 2, the reference electrode 7, the working electrode 8, the ion-selective membrane 9, and the ion crystal 10 have configurations similar to those of the microanalysis chip P1, and hence description thereof is omitted. The phrase "configurations similar" means that individual components such as the dispensing section 6, the channel chamber 1, and the channel chamber 2 are similar, and does not mean that a relative positional relationship of the individual components is similar as well.

Components common to the microanalysis chip P1 are hereinafter described with common component names.

<Permeation Anisotropy>

The microanalysis chip P4 was formed on a paper-made porous substrate S2 having permeation anisotropy as described below.

With reference to FIGS. 9, the permeation anisotropy of the paper-made porous substrate S2 is described.

In FIG. 9(a) to FIG. 9(c), an X axis, a Y axis, and a Z axis perpendicularly intersect with each other.

FIG. 9(a) shows an XY plane parallel to a top surface of the paper-made porous substrate S2, FIG. 9(b) shows an XZ plane (B-B cross section) perpendicular to the XY plane, and FIG. 9(c) shows a YZ plane (C-C cross section) perpendicular to the XY plane.

As illustrated in FIGS. 9, when the specimen is dispensed to the porous substrate in which no channel wall is formed, the dispensed specimen forms a permeation shape 91 being an ellipse on the surface of the porous substrate.

A major axis direction (X axis direction) of the ellipse matches a fiber direction F1.

When a predetermined time period has elapsed from dispensing of the specimen T to a point of (X, Y)=(0, 0) illustrated in FIG. 9(a), as illustrated in FIG. 9(a) to FIG. 9(c), the permeation shape 91 of the specimen T had an approximate shape of a shape obtained by cutting a prolate spheroid into half along its major axis. The prolate spheroid means a solid of revolution obtained by rotating an ellipse about its major axis as a rotary axis.

<Traveling Direction of Specimen>

When a predetermined time period has elapsed from dispensing of the specimen T to the point of (X, Y)=(0, 0) illustrated in FIG. 9(a), as illustrated in FIG. 9(a) to FIG. 9(c), the maximum value in the X axis direction of the outer circumference of the permeation shape 91 of the specimen T is represented by X1, the maximum value in the Y axis direction thereof is represented by Y1, and the maximum value in the Z axis direction thereof is represented by Z1.

In addition, in an XYZ space, a "direction of a vector" extending from the dispensing point of (X, Y, Z)=(0, 0, 0) to a point of (X, Y, Z)=(X1, Y1, Z1) can be defined as a "traveling direction of the specimen T."

However, the maximum value that Z1 can take is the channel depth DP.

When the channel depth DP is equal to the thickness DP1 of the porous substrate, the maximum value that Z1 can take is the thickness DL1 of the porous substrate.

Accordingly, when the thickness of the porous substrate is small as compared to the channel length or the channel width, after several seconds from the dispensing of the specimen T, the "traveling direction of the specimen T" means a "direction in which the specimen T travels in parallel to the XY plane."

After that, the specimen T reaches a channel wall surface to start spreading along the channel wall surface, and the "traveling direction of the specimen T" becomes parallel to the channel wall surface.

With reference to FIG. 8, a feature of Example 4 is described. The feature of Example 4 is as follows.

An arithmetic mean value of an angle formed between a major axis direction of the ellipse and a channel wall surface direction parallel to a first-channel first-wall surface 3a defining the channel 3 (first channel), and an angle formed by the major axis direction of the ellipse and a channel wall surface direction parallel to a first-channel second-wall surface 3b defining the channel 3 (first channel) is represented by an average angle r1 (0°≤r1≤90°).

An arithmetic mean value of an angle formed between the major axis direction of the ellipse and a channel wall surface direction parallel to a second-channel first-wall surface 4a defining the channel 4 (second channel), and an angle formed between the major axis direction of the ellipse and a channel wall surface direction parallel to a second-channel second-wall surface 4b defining the channel 4 (second channel) is represented by an average angle r2 (0°≤r2≤90°).

The feature of Example 4 resides in that the average angle r1 and the average angle r2 satisfy a relationship of r1>r2.

<Porous Substrate Used in Example 4>

When a permeation speed in the major axis (X axis) direction illustrated in FIGS. 9 was represented by VX, a permeation speed in a first minor axis (Y axis) direction was represented by VY, and a permeation speed in a second minor axis (Z axis) direction was represented by VZ, when a first permeation ratio E1 in the major and minor axis directions was represented by E1=(VX/VY), and when a second permeation ratio E2 in the major and minor axis directions was represented by E2=(VX/VZ), the first permeation ratio E1 in the major and minor axis directions was 2, and the second permeation ratio E2 in the major and minor axis directions was also 2.

The thickness DL1 was 0.1 mm, and a porosity ε1 was 50%.

The material of the paper-made porous substrate S2 is not limited to paper, and resin, glass, an inorganic substrate, cloth, metal paper, or the like may be used. The porous substrate is only required be a substrate having therein a porous structure, such as an open cell structure or a network structure including a nanofiber structure, which causes a capillary action with respect to liquid and have the permeation anisotropy as described above. Further, the permeation ratio E1, the thickness DL1, and the porosity ε1 of the paper-made porous substrate S2 are also not limited to the above-mentioned values.

<Configuration of Channels>

A channel pattern of the microanalysis chip P4 is described.

FIG. 8 simply shows a top view of an example of the microanalysis chip P4.

The feature of Example 4 resides in that, in a case in which the fiber direction F1 is regarded as 0°, when the average angle of the channel 3 is represented by r1 ($0°{\leq}r1{\leq}90°$) and the average angle of the channel 4 is represented by r2 ($0°{\leq}r2{\leq}90°$), r1>r2 is satisfied.

As described above, the fiber direction F1 is the same direction as the major axis direction of the permeation shape being the ellipse formed on the surface of the porous substrate by the specimen dispensed to the porous substrate.

As an example of Example 4, the channel pattern was formed with the average angle of the channel 3 being set to r1=90° and the average angle of the channel 4 being set to r2=0°.

[Comparative Example 4]

In order to describe the effects of Example 4 in more detail, Comparative Example 4-1 and Comparative Example 4-2 are given.

In both of Comparative Example 4-1 and Comparative Example 4-2, points other than the points described below were similar to those of Example 4.

In Comparative Example 4-1, the average angle r1 of the channel 3 and the average angle r2 of the channel 4 were set to be equal to each other, and were each set to r1=r2=0°.

Further, also in Comparative Example 4-2, r1 and r2 were set to be equal to each other, but were each set to r1=r2=90°.

[Points in which Example 4 is Superior to Comparative Example 4]

Points in which Example 4 is superior to Comparative Example 4-1 and Comparative Example 4-2 are described.

The time period required for the specimen to reach the channel chamber after being dispensed is dependent on the average angle of the channel with respect to the fiber direction, even in the case of the same channel volume. The "average angle of the channel with respect to the fiber direction" is hereinafter also referred to as "average angle of the channel." As described above, in this Example, the channel pattern was formed on the paper-made porous substrate S2 having permeation anisotropy in which the permeation ratio E1 in the major and minor axis directions was twice as large. In this case, when the fiber direction F 1 is regarded as 0°, a time period in which the specimen travels in a direction of 90° is twice as long as a time period in which the specimen travels in a direction of 0° by the same distance.

Example 4:

the average angle of the channel between the dispensing section and the reference electrode was 90°; and
the average angle of the channel between the dispensing section and the working electrode was 0°.

Comparative Example 4-1:

the average angle of the channel between the dispensing section and the reference electrode was 0°; and
the average angle of the channel between the dispensing section and the working electrode was 0°.

Comparative Example 4-2:

the average angle of the channel between the dispensing section and the reference electrode was 90°; and
the average angle of the channel between the dispensing section and the working electrode was 90°.

After the dispensing, as the flow of the specimen to each of the working electrode and the reference electrode, a time period required until the specimen reached the channel chamber (electrode) after being dispensed was a time period of about 20 seconds when the average angle of the channel was 0°, and was a time period of about 40 seconds when the average angle of the channel was 90°.

The time period required until the measurement potential became stable after the specimen reached the working electrode was 45 seconds, and further, the time period required for the measurement was 50 seconds.

Further, the time period required for backflow of KCl through the channel was a time period of about 30 seconds when the average angle of the channel was 0°, and was a time period of about 60 seconds when the average angle of the channel was 90°.

Thus, in Example 4, the reaching time of backflow was as follows. The time period required for the specimen to reach the reference electrode from the dispensing section was 40 (sec), the time period required for backflow from the reference electrode to the dispensing section was 60 seconds, and the time period required for backflow from the dispensing section to the working electrode was 30 seconds. Thus, the reaching time of backflow was a total of 130 seconds.

Table 4 shows the end time of measurement, the reaching time of backflow, and the like in Example 4 and Comparative Examples 4-1 and 4-2.

[Table 4]

Table 4

| | Reaching time to reference electrode T1 [second] | Reaching time to working electrode T2 [second] | Start time of measurement [second] | Reaching time of backflow [second] | Measurable time [second] | End time of measurement [second] |
|---|---|---|---|---|---|---|
| Example 4 | 40 | 20 | 65 | 130 | 65 | 115 |
| Comparative Example 4-1 | 20 | 20 | 65 | 80 | 15 | - |
| Comparative Example 4-2 | 40 | 40 | 85 | 160 | 75 | 135 |

Table 4 shows, in the configurations of Example 4 and Comparative Example 4, through use of a time at which the specimen is dispensed as a reference,

a time period required for the specimen to reach each of the electrodes ("reaching time to reference electrode" and "reaching time to working electrode"),
a time period required until the specimen concentration measurement can be started ("start time of measurement"),
a time period required until the measurement can be ended ("end time of measurement"),
a time period required for the ion crystal KCl to reach the working electrode via the specimen flowing backward ("reaching time of backflow"), and
an elapsed time period from the "start time of measurement" to the "reaching time of backflow" ("measurable time"), in units of seconds.

In Example 4, the measurement was able to be ended in 115 seconds, and the time at which the measurement was ended was earlier than the time at which the ion crystal KCl flowed backward to reach the working electrode.

Meanwhile, in Comparative Example 4-1, KCl reached the working electrode before the measurement end, and hence accurate ion concentration of the specimen was not able to be measured.

Further, in Comparative Example 4-2, the measurement was able to be ended before KCl reached the working electrode, but a time period further longer by 20 seconds than that in Example 4 was required until the end of the measurement.

With the above-mentioned evaluation, the superiority of Example 4 to Comparative Example 4-1 and Comparative Example 4-2 was confirmed.

The present invention is not limited to the embodiments described above, and various changes and modifications can be made without departing from the spirit and scope of the present invention. The following claims are thus appended hereto in order to make the scope of the present invention public.

The present application claims priority based on Japanese Patent Application No. 2021-158506 filed on September 28, 2021, and the entire contents thereof are incorporated herein by reference.

[Reference Signs List]

| 1 | channel chamber including reference electrode 7 |
| 2 | channel chamber including working electrode 8 |
| 3 | channel connected from dispensing section 6 to channel chamber 1 |
| 4 | channel connected from dispensing section 6 to channel chamber 2 |
| 5 | channel wall |
| 6 | dispensing section |
| 7 | reference electrode |
| 8 | working electrode |
| 9 | ion-selective membrane |
| 1 | ion crystal including Cl ion |
| 11 | hydrophobic resin pattern |
| 12 | connection portion between channel chamber 1 and channel 3 |
| S1, S2 | porous substrate |
| F1 | major axis direction of pore of porous substrate with anisotropy |
| DL1 | thickness of porous substrate |

**Claims**

1. A microanalysis chip comprising a porous substrate having provided therein a channel wall, the channel wall defining:

   a dispensing section to which a specimen is to be dispensed;
   a first channel chamber;
   a second channel chamber;
   a first channel connecting the dispensing section and the first channel chamber to each other; and
   a second channel connecting the dispensing section and the second channel chamber to each other,
   wherein the first channel chamber has a reference electrode arranged therein, the reference electrode having a surface on which an ion crystal having specimen solubility is arranged,
   wherein the second channel chamber has a working electrode arranged therein, and
   wherein the first channel and the second channel are configured so that, when a time period required for the specimen to reach the ion crystal after the specimen is dispensed to the dispensing section is represented by T1 and a time period required for the specimen to reach the working electrode after the specimen is dispensed to the dispensing section is represented by T2, the time period T1 and the time period T2 satisfy a relationship of T1>T2.

2. The microanalysis chip according to claim 1, wherein, when a channel sectional area of the first channel is represented by A1, and when a channel sectional area of the second channel is represented by A2, the channel sectional area A1 and the channel sectional area A2 have a relationship of A1<A2.

3. The microanalysis chip according to claim 1, wherein, when a channel volume of the first channel is represented by V1, and when a channel volume of the second channel is represented by V2, the channel volume V1 and the channel volume V2 have a relationship of V1>V2.

4. The microanalysis chip according to claim 1, wherein the first channel has hydrophobic resin regions formed therein in a dot pattern.

5. The microanalysis chip according to claim 1,

   wherein the porous substrate has permeation anisotropy,
   wherein, when the specimen is dispensed to the porous substrate in which the channel wall is not formed, a permeation shape formed on a surface of the porous substrate by the dispensed specimen is an ellipse, and
   wherein, when an arithmetic mean value of an angle formed between a major axis direction of the ellipse and a channel wall surface direction parallel to a first-channel first-wall surface defining the first channel, and an angle formed by the major axis direction of the ellipse and a channel wall surface direction parallel to a first-channel second-wall surface defining the first channel is represented by an average angle r1 (0°≤r1≤90°), and when an arithmetic mean value of an angle formed between the major axis direction of the ellipse and a channel wall surface direction parallel to a second-channel first-wall surface defining the second channel, and an angle formed between the major axis direction of the ellipse and a channel wall surface direction parallel to a second-channel second-wall surface defining the second channel is represented by an average angle r2 (0°≤r2≤90°), the average angle r1 and the average angle r2 have a relationship of r1>r2.

6. The microanalysis chip according to any one of claims 1 to 5, wherein the working electrode is covered with an ion-selective membrane containing a component having ion selectivity.

# FIG. 1

# FIG. 2

# FIG. 3

# FIG. 4

DISPENSING ▼

▼ REACHING TIME TO REFERENCE ELECTRODE T1

REACHING TIME OF BACKFLOW

▼ REACHING TIME TO WORKING ELECTRODE T2

▼ START TIME OF MEASUREMENT

▼ END TIME OF MEASUREMENT

TIME

TIME PERIOD REQUIRED UNTIL MEASUREMENT POTENTIAL BECOMES STABLE

TIME PERIOD REQUIRED FOR MEASUREMENT

TIME PERIOD REQUIRED FOR KCl TO REACH WORKING ELECTRODE BY BACKFLOW

TIME PERIOD IN WHICH MEASUREMENT IS AFFECTED BY BACKFLOW

# FIG. 5

▼ REACHING TIME TO REFERENCE ELECTRODE T1

END TIME OF MEASUREMENT  REACHING TIME OF BACKFLOW

DISPENSING

▼

▼ REACHING TIME TO WORKING ELECTRODE T2

▼ START TIME OF MEASUREMENT ▼ ▼

→ TIME

TIME PERIOD REQUIRED UNTIL MEASUREMENT POTENTIAL BECOMES STABLE

TIME PERIOD REQUIRED FOR MEASUREMENT

TIME PERIOD REQUIRED FOR KCl TO REACH WORKING ELECTRODE BY BACKFLOW

EP 4 411 360 A1

# FIG. 6

# FIG. 7

# FIG. 8

# FIG. 9

(a)

(b)

(c)

## INTERNATIONAL SEARCH REPORT

| | International application No. |
|---|---|
| | **PCT/JP2022/035095** |

**A.    CLASSIFICATION OF SUBJECT MATTER**

*G01N 27/30*(2006.01)i; *B01J 19/00*(2006.01)i; *G01N 27/28*(2006.01)i; *G01N 27/416*(2006.01)i
FI:    G01N27/30 311Z; G01N27/28 301Z; G01N27/416 361Z; B01J19/00 321

According to International Patent Classification (IPC) or to both national classification and IPC

**B.    FIELDS SEARCHED**

Minimum documentation searched (classification system followed by classification symbols)

G01N27/30; B01J19/00; G01N27/28; G01N27/416

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII); Scopus

**C.    DOCUMENTS CONSIDERED TO BE RELEVANT**

| Category* | Citation of document, with indication, where appropriate, of the relevant passages | Relevant to claim No. |
|---|---|---|
| Y | RUECHA, N. et al. Fully Inkjet-Printed Paper-Based Potentiometric Ion-Sensing Devices. Anal. Chem. 2017, vol. 89, pp. 10608-10616, ISSN 0003-2700  summary, p. 10609, left column, 2nd paragraph, p. 10609, right column, 4th paragraph to p. 10610, left column, 2nd paragraph, p. 10611, right column, 1st paragraph, p. 10612, left column, 2nd paragraph, fig. 1-2, 4 | 1-3, 6 |
| Y | JP 2014-6086 A (SHARP CORP) 16 January 2014 (2014-01-16)  paragraphs [0011], [0046]-[0047], [0059]-[0060], [0066], fig. 1-2 | 1-3, 6 |
| A | US 2016/0033438 A1 (PRESIDENT AND FELLOWS OF HARVARD COLLEGE) 04 February 2016 (2016-02-04)  entire text, all drawings | 1–6 |
| A | US 2014/0183059 A1 (PRESIDENT AND FELLOWS OF HARVARD COLLEGE) 03 July 2014 (2014-07-03)  entire text, all drawings | 1–6 |
| A | JP 2011-39070 A (ABBOTT POINT OF CARE INC) 24 February 2011 (2011-02-24)  entire text, all drawings | 1–6 |

☑ Further documents are listed in the continuation of Box C.     ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **24 October 2022** | **08 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/035095**

| C. | DOCUMENTS CONSIDERED TO BE RELEVANT | |
|---|---|---|
| Category* | Citation of document, with indication, where appropriate, of the relevant passages | Relevant to claim No. |
| A | JP 4-50530 B2 (FUJI PHOTO FILM CO LTD) 14 August 1992 (1992-08-14)<br>entire text, all drawings | 1–6 |

Form PCT/ISA/210 (second sheet) (January 2015)

**INTERNATIONAL SEARCH REPORT**
**Information on patent family members**

International application No.

**PCT/JP2022/035095**

| Patent document cited in search report | | | Publication date (day/month/year) | Patent family member(s) | | | Publication date (day/month/year) |
|---|---|---|---|---|---|---|---|
| JP | 2014-6086 | A | 16 January 2014 | (Family: none) | | | |
| US | 2016/0033438 | A1 | 04 February 2016 | WO entire text, all drawings | 2014/149611 | A1 | |
| US | 2014/0183059 | A1 | 03 July 2014 | WO entire text, all drawings | 2013/036617 | A1 | |
| JP | 2011-39070 | A | 24 February 2011 | US entire text, all drawings | 2006/0160164 | A1 | |
| | | | | WO | 2005/026689 | A2 | |
| | | | | EP | 2551671 | A2 | |
| JP | 4-50530 | B2 | 14 August 1992 | US entire text, all drawings | 4528085 | A | |
| | | | | US | 4555274 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016033438
- JP 2021158506 A

**Non-patent literature cited in the description**

- **NIPAPAN RUECHA ; ORAWON CHAILAPAKUL ; KOJI SUZUKI ; DANIEL CITTERIO.** Fully Inkjet-Printed Paper-Based Potentiometric Ion-Sensing Devices. *Analytical Chemistry,* 29 August 2017, vol. 89, 10, , 608-10, 616